# FASCICULE DE BREVET EUROPEEN

(11) **EP 2 871 392 B1**
(45) Date de publication et mention de la délivrance du brevet: **13.04.2016**
(21) Numéro de dépôt: 14192486.0
(22) Date de dépôt: 10.11.2014
(51) Int. Cl.: F16K 7/08, B64B 1/70

(54) **Dispositif de contrôle d'un flux de matériau granulaire à double diaphragme**
Vorrichtung zur Kontrolle eines Flusses von granulärem Material mit Doppelmembran
Device for controlling a flow of granular material with double diaphragm

(30) Priorité: 12.11.2013 FR 1361025
(43) Date de publication de la demande: 13.05.2015
(73) Titulaire: Centre National d'Etudes Spatiales (C.N.E.S.), 75001 Paris (FR); Comat (Concept Mecanique et Assistance Technique), 31130 Flourens (FR)
(72) Inventeur: Bourrec, Lionel, 31540 ROUMENS (FR); Huens, Thomas, 31400 TOULOUSE (FR)
(74) Mandataire: Cabinet BARRE LAFORGUE & associés

(56) Documents cités:
- EP-A1- 1 450 086
- FR-A- 1 221 730
- GB-A- 803 144
- JP-A- S60 188 669
- US-A- 5 449 141
- US-A1- 2005 092 944
- US-A1- 2006 216 173

## Description

L'invention concerne un dispositif de contrôle d'un flux de matériau granulaire, notamment une vanne de libération de matériau granulaire.

Les vannes pour matériau granulaire sont particulières. En effet la plupart des vannes pour fluide ne peuvent pas être utilisées au risque que des grains du matériau granulaire ne bloquent leur mécanisme et/ou ne les laissent entrouverte.

A contrario, les vannes pour matériau granulaire n'ont pas besoin d'être parfaitement étanches, et doivent seulement présenter une/des ouverture(s), en position fermée, de diamètre(s) inférieur(s) au diamètre des grains du matériau granulaire.

De nombreuses vannes à diaphragme ont été décrites. Ainsi US 2005/0092944 présente une vanne à manchon souple dont une première extrémité est actionnée en rotation par un moteur et dont la deuxième extrémité est actionnée en rotation par un opérateur à l'aide d'une pédale, de façon à permettre l'ouverture et la fermeture d'un passage par torsion du manchon souple.

Cependant, une telle vanne étant au moins partiellement activée manuellement, elle n'est pas adaptée à un dispositif sans opérateur humain, par exemple un objet sans pilote tel qu'un ballon atmosphérique.

En particulier, dans une telle vanne, une panne simple du moteur actionnant la première extrémité du manchon souple conduit à un blocage au moins partiel de la vanne dans une position donnée.

Or, lorsque de tels dispositifs sont embarqués sur des dispositifs inhabités et distants, comme des ballons atmosphériques par exemple, leur actionnement doit être résistant à une panne simple, et dans certains cas à une panne multiple.

En effet; de telles vannes peuvent être utilisées sur des ballons atmosphériques pour contrôler des flux de billes de lest, permettant ainsi de contrôler l'altitude du ballon et donc aussi sa trajectoire. Or les conditions météorologiques et les variations de conditions dans lesquelles évoluent les ballons atmosphériques mènent à des pannes mécaniques plus fréquentes que dans des applications au sol. La résistance de la vanne à une ou plusieurs pannes est donc essentielle pour conserver le contrôle de l'altitude du ballon atmosphérique, et en particulier pour éviter un lâcher intempestif rapide de billes de lest.

L'invention vise donc à pallier ces inconvénients.

L'invention vise à proposer un dispositif de contrôle d'un flux de matériau granulaire qui est résistant à une panne simple.

L'invention vise plus particulièrement un tel dispositif qui est résistant à une panne multiple.

L'invention vise plus particulièrement un tel dispositif qui peut surmonter une panne en position fermée et une panne en position ouverte.

L'invention vise notamment à proposer un tel dispositif qui soit léger et compact.

L'invention vise aussi à proposer un tel dispositif qui consomme peu d'énergie.

L'invention vise également à proposer un tel dispositif qui résiste et fonctionne dans des conditions atmosphériques difficiles, notamment à basse température, basse pression et taux d'humidité élevé, notamment un dispositif qui résiste au givre.

L'invention vise également à proposer un tel dispositif qui permettant un contrôle réactif d'un flux de matière.

L'invention concerne donc un dispositif de contrôle d'un flux de matériau granulaire, comprenant :
- un bâti présentant au moins un conduit de passage de matériau granulaire,
- un premier dispositif, dit diaphragme amont:
   o interposé dans ledit conduit,
   o comprenant au moins une première portion, dite portion aval,
   o comprenant au moins une deuxième portion, dite portion amont, mobile en rotation au moins par rapport à la portion aval,
   o présentant au moins une forme ouverte dans laquelle il permet un passage d'un flux de matériau granulaire dans ledit conduit, pour au moins un premier déplacement angulaire en rotation de la portion amont par rapport à la portion aval,
   ∘ présentant au moins une forme fermée dans laquelle il empêche le passage d'un flux de matériau granulaire dans ledit conduit, pour au moins un deuxième déplacement angulaire en rotation de la portion amont par rapport à la portion aval,
- une première bague, dite bague amont, montée rotative par rapport au bâti autour d'un premier axe, dit axe amont, et reliée à ladite portion amont dudit diaphragme amont pour pouvoir, par une rotation autour de l'axe amont, déplacer la portion amont du diaphragme amont en rotation par rapport à la portion aval du diaphragme amont, de façon à déplacer le diaphragme amont entre une forme ouverte et une forme fermée,
- une deuxième bague, dite bague intermédiaire montée rotative par rapport au bâti autour d'un deuxième axe, dit axe intermédiaire, et montée rotative par rapport à la bague amont, et reliée à ladite portion aval dudit diaphragme amont pour pouvoir, par une rotation autour de l'axe intermédiaire, déplacer la portion aval du diaphragme amont en rotation par rapport à la portion amont du diaphragme amont, de façon à déplacer le diaphragme amont entre une forme ouverte et une forme fermée, de sorte qu'une rotation relative entre la bague amont et la bague intermédiaire permet de déplacer le diaphragme amont entre une forme ouverte et une forme fermée,
   caractérisé en ce qu'il comprend en outre au moins :
   - un deuxième diaphragme, dit diaphragme aval :
      o interposé dans ledit conduit,
      o comprenant au moins une première portion, dite portion aval,
      o comprenant au moins une deuxième portion, dite portion amont, mobile en rotation au moins par rapport à la portion aval,
      o présentant au moins une forme ouverte dans laquelle il permet un passage d'un flux de matériau granulaire dans ledit conduit, pour au moins un premier déplacement angulaire en rotation de la portion amont par rapport à la portion aval,
      ∘ présentant au moins une forme fermée dans laquelle il empêche le passage d'un flux de matériau granulaire dans ledit conduit, pour au moins un deuxième déplacement angulaire en rotation de la portion amont par rapport à la portion aval,
      o ladite portion amont du diaphragme aval étant reliée à ladite bague intermédiaire de façon à pouvoir, par une rotation de la bague intermédiaire autour de l'axe intermédiaire, être déplacée en rotation par rapport à la portion aval du diaphragme aval, de façon à déplacer le diaphragme aval entre une forme ouverte et une forme fermée,
   - une troisième bague, dite bague aval, montée rotative par rapport au bâti autour d'un axe aval, et montée rotative par rapport à la bague amont et à la bague intermédiaire, et reliée à ladite portion aval du diaphragme aval pour pouvoir, par une rotation autour dudit axe aval, déplacer la portion aval du diaphragme aval en rotation par rapport à la portion amont du diaphragme aval, de façon à déplacer le diaphragme aval entre une forme ouverte et une forme fermée,
   - de sorte qu'une rotation relative entre la bague intermédiaire et la bague aval permet de déplacer le diaphragme aval entre une forme ouverte et une forme fermée.

Dans tout le texte, on désigne par l'expression « entre une forme fermée et une forme ouverte » une déformation d'un diaphragme d'une forme fermée vers une forme ouverte - c'est-à-dire qu'on ouvre le diaphragme - ou d'une forme ouverte vers une forme fermée - c'est-à-dire qu'on ferme le diaphragme.

Un diaphragme présente une position fermée dans laquelle il empêche tout passage de matériau granulaire, et une pluralité de positions ouvertes, de sections de passage distinctes, de façon à pouvoir réguler le débit de matériau granulaire dans le conduit.

Un dispositif selon l'invention, en cas de blocage de l'une des bagues (amont, intermédiaire ou aval), continue de fonctionner de façon fiable et de permettre de contrôler le flux de matériau granulaire, et ce quelle que soit la position dans laquelle l'une des bagues est bloquée. En effet, même en cas de blocage en rotation de l'une des bagues par rapport au bâti, une autre bague permet toujours de fermer et ouvrir chaque diaphragme, car c'est la position angulaire relative entre bague amont et bague intermédiaire qui détermine si le diaphragme est en position fermée ou dans une position ouverte.

En outre, même en cas de blocage de la bague amont et de la bague aval simultanément, la bague intermédiaire permet d'ouvrir et fermer chacun des deux diaphragmes amont et aval.

Ainsi la forme (ouverte ou fermée) d'un diaphragme est entièrement indépendante de sa position angulaire par rapport au bâti.

Un dispositif selon l'invention est donc résistant à une panne unique, notamment un blocage, de l'une ou l'autre des bagues d'actionnement du diaphragme. Il est en outre résistant à des pannes doubles de certains couples de bagues.

En outre un dispositif selon l'invention permet une ouverture et une fermeture du conduit en théorie deux fois plus rapide à dispositif d'actionnement égal. En effet un actionnement contrarotatif de la bague amont et de la bague intermédiaire permet de déplacer le diaphragme entre une forme ouverte et une forme fermée deux fois plus rapidement que dans les dispositifs dans lesquels seule une portion amont ou une portion aval du diaphragme est actionnée en rotation par rapport au bâti.

La bague intermédiaire est disposée, dans le bâti, en aval de la bague amont selon un sens d'écoulement arbitraire du matériau granulaire dans la conduite, notamment selon un sens d'écoulement privilégié du matériau granulaire dans la conduite.

Ainsi, lorsque l'invention est appliquée à un ballon atmosphérique pour la libération de lest, le matériau granulaire (billes de lest) s'écoule par gravité d'un réservoir de lest vers l'atmosphère située au-dessous du réservoir de lest, lorsque le diaphragme est dans une forme ouverte.

Avantageusement et selon l'invention, seule une rotation relative entre la bague amont et la bague intermédiaire permet de déplacer le diaphragme amont entre une forme ouverte et une forme fermée.

Avantageusement et selon l'invention, le diaphragme amont comprend avantageusement au moins un manchon souple dont une première extrémité est solidaire en rotation de la bague amont autour de l'axe amont et la deuxième extrémité est solidaire en rotation de la bague intermédiaire autour de l'axe intermédiaire.

De même, le diaphragme aval comprend avantageusement au moins un manchon souple dont une première extrémité est solidaire en rotation de la bague intermédiaire autour de l'axe intermédiaire et la deuxième extrémité est solidaire en rotation de la bague aval autour de l'axe aval.

La portion amont et la portion aval du manchon souple correspondent à deux portions distinctes du manchon souple. Notamment la portion amont et la portion aval du manchon souple sont deux portions suffisamment éloignées l'une de l'autre pour que le manchon souple puisse être fermé par torsion par au moins un déplacement angulaire relatif entre ladite portion amont et ladite portion aval.

Le manchon souple est déformable entre au moins une forme ouverte dans laquelle il présente une ouverture de passage d'un matériau granulaire, et une forme fermée. Sa forme est déterminée par la position angulaire relative de sa portion amont et de sa portion aval, et donc par la position angulaire relative de la bague amont (ou de la bague intermédiaire) et de la bague intermédiaire (respectivement de la bague.aval). Ainsi, par exemple, lorsque la bague amont et la bague intermédiaire tournent en sens opposés ou dans le même sens à des vitesses distinctes, le manchon souple du diaphragme amont subit une torsion et il est déformé entre une position ouverte et une position fermée.

Le manchon souple est avantageusement cylindrique. La longueur du manchon souple est avantageusement choisie en fonction de :
- la distance minimale entre sa portion amont solidaire d'une première bague et sa portion aval solidaire d'une deuxième bague,
- du rayon de la première bague,
- du rayon de la deuxième bague.

En effet, le manchon souple est en position fermée dès lors que l'angle relatif entre la première bague à laquelle il est relié par une extrémité et la deuxième bague à laquelle il est relié par une deuxième extrémité est supérieur à 180°, angle auquel les génératrices du manchon souple sont globalement croisées au centre du manchon, de sorte qu'il empêche le passage de matériau granulaire. Lorsque le manchon souple est en position fermée, les génératrices se croisent au centre du conduit.

La longueur minimale du manchon souple doit donc être choisie pour que, lorsque les deux extrémités de ses génératrices sont à 180° l'une de l'autre, ladite génératrice soit sensiblement rectiligne, de sorte que l'ensemble des génératrices se croise sensiblement en un point du conduit, le conduit étant ainsi fermé.

La longueur minimale du manchon souple du diaphragme amont, entre un point d'attache à une première bague et un point d'attache à u bague intermédiaire, selon une même génératrice dudit manchon souple entre ces deux points d'attache, est avantageusement sensiblement égale à la racine carrée de la somme du carré de la distance entre la bague amont et la bague intermédiaire et du carré de la somme du rayon de l'alésage de la bague amont et du rayon de l'alésage de la bague intermédiaire. La longueur strictement minimale est en réalité légèrement inférieure à cette valeur, notamment pour des matériaux granulaires à gros grains : en effet une ouverture de section de passage de diamètre inférieur à un diamètre minimal ou à un diamètre moyen des grains du matériau granulaire peut être toléré, voire recherché, dans certaines applications.

Rien n'empêche de prévoir un manchon plus long. Cependant, l'angle relatif minimal entre bague amont et bague intermédiaire pour la fermeture d'un manchon dépend de la longueur du manchon du diaphragme amont.

La longueur du manchon est avantageusement choisie proche de la longueur minimale de façon à limiter le temps d'ouverture et de fermeture du diaphragme et à maintenir un bon niveau de contrôle sur le flux de matériau granulaire. En effet, lorsque le manchon est court, le déplacement angulaire entre un angle entre bague amont et bague intermédiaire correspondant à une forme fermée du diaphragme et un angle entre bague amont et bague intermédiaire correspondant à une forme ouverte du diaphragme est moindre que pour un manchon long. Les durées d'ouverture et de fermeture du diaphragme sont donc plus courtes, à vitesse nominale égale de rotation de la bague amont par rapport à la bague intermédiaire.

De même, lorsque le manchon est court, notamment de longueur proche de sa longueur minimale, la paroi formée par le manchon souple en forme fermée est plus mince et donc la probabilité que des grains du matériau granulaire restent coincés dans le manchon souple en forme fermée est moindre.

Au contraire, dans une position ouverte les deux extrémités de chaque génératrice forment un angle distinct de 180° par rapport au centre du conduit, notamment dans la position ouverte présentant la section de passage maximale, les deux extrémités de chaque génératrice sont sur des bords situés d'un même côté de la bague amont et de la bague intermédiaire et forment donc, par rapport au centre du conduit, un angle d'environ 0°.

En outre, avantageusement et selon l'invention, le matériau du manchon souple du diaphragme est avantageusement choisi pour pouvoir résister aux conditions d'utilisation d'un dispositif selon l'invention. Il est notamment choisi pour pouvoir résister aux conditions de températures, d'hygrométrie et de pression rencontrées à bord d'un ballon atmosphérique, notamment d'un ballon stratosphérique.

De plus, un dispositif selon l'invention comprend avantageusement en outre un dispositif d'actionnement de la bague amont, et un dispositif d'actionnement de la bague intermédiaire distinct du dispositif d'actionnement de la bague amont. Plus particulièrement, le dispositif d'actionnement de la bague amont est adapté pour pouvoir actionner ladite bague amont indépendamment de ladite bague intermédiaire, notamment indépendamment de la position de ladite bague intermédiaire. Le dispositif d'actionnement de la bague intermédiaire est adapté pour pouvoir actionner ladite bague intermédiaire indépendamment de ladite bague amont, notamment indépendamment de la position de ladite bague amont.

De même, avantageusement et selon l'invention, un dispositif selon l'invention comprend en outre un dispositif d'actionnement de la bague aval, adapté pour pouvoir actionner ladite bague aval indépendamment de la bague amont et de la bague intermédiaire.

Ainsi, l'actionnement du dispositif de contrôle d'un flux de matériau granulaire conforme à l'invention est entièrement redondant et indépendant. Cela est particulièrement avantageux dans des applications ou l'intervention humaine n'est pas possible ou difficile (ballon sonde, engins inhabités, satellites, etc.).

Avantageusement et selon l'invention, le dispositif d'actionnement de la bague amont comprend un arbre moteur sur lequel est montée une vis sans fin, ladite vis sans fin étant engagée avec une roue dentée pour pouvoir entraîner cette roue dentée en rotation, ladite roue dentée étant adaptée pour faire tourner ladite bague amont autour de l'axe amont.

De même, le dispositif d'actionnement de la bague intermédiaire comprend un arbre moteur sur lequel est montée une vis sans fin, ladite vis sans fin étant engagée avec une roue dentée pour pouvoir entraîner cette roue dentée en rotation, ladite roue dentée étant adaptée pour faire tourner ladite bague intermédiaire autour de l'axe intermédiaire.

De même, le dispositif d'actionnement de la bague aval comprend un arbre moteur sur lequel est montée une vis sans fin, ladite vis sans fin étant engagée avec une roue dentée pour pouvoir entraîner cette roue dentée en rotation, ladite roue dentée étant adaptée pour faire tourner ladite bague aval autour de l'axe aval.

De plus, les pas de la vis sans fin et de la roue dentée sont avantageusement choisis pour que leur engagement soit irréversible, c'est-à-dire qu'une rotation de la vis sans fin entraîne la roue dentée en rotation, tandis que toute rotation de la roue dentée est bloquée par la vis sans fin, que l'arbre moteur soit bloqué en position par un actionneur ou non. Ainsi le diaphragme, lorsqu'il est dans une forme fermée, retient le matériau granulaire malgré la pression que celui-ci exerce sur le diaphragme et ce même en l'absence d'un couple appliqué sur les bagues amont et intermédiaire.

Avantageusement et selon l'invention, l'arbre moteur est directement monté en sortie d'un actionneur, notamment d'un moteur électrique tournant, adapté pour pouvoir faire tourner l'arbre moteur dans deux sens de rotation.

De plus, avantageusement et selon l'invention, la bague amont présente une périphérie extérieure dentée directement engagée avec ladite vis sans fin d'un dispositif d'actionnement de la bague amont. De même, la bague intermédiaire présente une périphérie extérieure dentée directement engagée avec ladite vis sans fin d'un dispositif d'actionnement de la bague intermédiaire. De même, la bague aval présente une périphérie extérieure dentée directement engagée avec ladite vis sans fin d'un dispositif d'actionnement de la bague aval.

Avantageusement et selon l'invention:
- l'axe amont correspond sensiblement à un axe de passage de matériau granulaire dans l'alésage de la bague amont,
- l'axe intermédiaire correspond sensiblement à un axe de passage de matériau granulaire dans l'alésage de la bague intermédiaire,
- l'axe aval correspond sensiblement à un axe de passage de matériau granulaire dans l'alésage de la bague aval.

En outre, avantageusement et selon l'invention, la bague amont présente un alésage au moins partiellement disposé dans le conduit pour permettre un passage du matériau granulaire à travers ledit alésage. C'est-à-dire que l'intersection entre la section de passage présentée par l'alésage de la bague amont et la section de passage du conduit présente une dimension suffisante au passage d'un flux de matériau granulaire.

Aussi, la bague amont présente un axe de symétrie. Ladite bague amont est montée rotative autour de son axe de symétrie par rapport au bâti. L'axe de symétrie de la bague amont et l'axe amont de la bague amont sont donc confondus.

En outre, avantageusement et selon l'invention, la bague intermédiaire présente un alésage au moins partiellement disposé dans le conduit pour permettre un passage du matériau granulaire à travers ledit alésage. C'est-à-dire que l'intersection entre la section de passage présentée par l'alésage de la bague intermédiaire et la section de passage du conduit présente une dimension suffisante au passage d'un flux de matériau granulaire.

Aussi, la bague intermédiaire présente un axe de symétrie. Ladite bague intermédiaire est montée rotative autour de son axe de symétrie par rapport au bâti. L'axe de symétrie de la bague intermédiaire et l'axe intermédiaire de la bague intermédiaire sont donc confondus.

La symétrie de la bague aval est avantageusement sensiblement identique à celle de la bague amont et de la bague intermédiaire.

De plus, avantageusement et selon l'invention, le conduit est sensiblement rectiligne d'axe, dit axe principal, et l'axe amont, l'axe intermédiaire et l'axe aval sont sensiblement confondus avec cet axe principal.

Cela permet d'obtenir une vanne droite.

Le conduit, la bague amont, la bague intermédiaire et la bague aval sont donc avantageusement coaxiaux. Ainsi, dans le cas d'un matériau granulaire s'écoulant à travers un dispositif selon l'invention par gravité, l'écoulement se fait d'autant plus facilement que le conduit et les bagues amont et intermédiaire sont alignés. L'axe du dispositif est donc avantageusement monté selon le vecteur gravité local.

De plus, les alésages des bagues amont et intermédiaire présentent avantageusement le même diamètre. De même, les alésages des bagues intermédiaire et aval présentent avantageusement le même diamètre.

Les inventeurs ont par ailleurs observé que la déformation d'un diaphragme comprenant un manchon souple vers une forme ouverte est parfois rendue difficile. En effet, en position fermée, le manchon est contraint par les forces de tension exercées sur lui par la rotation relative des bagues qui le déplacent. En position ouverte en revanche, les bagues n'exercent aucune tension sur le manchon. Ainsi, lors du déplacement des bagues l'une par rapport à l'autre d'une position angulaire relative correspondant à une forme fermée du manchon souple vers une position angulaire relative correspondant à une forme ouverte du manchon souple, le manchon souple reste parfois figé dans sa forme fermée.

C'est notamment le cas lorsque les contraintes qu'il subit normalement (par exemple, son propre poids, la pression du matériau granulaire, ...) ne sont pas suffisantes à le déformer d'une forme fermée vers une forme ouverte. Un tel manchon reste par exemple bloqué en position fermée dans des conditions de givre.

C'est pourquoi, un dispositif selon l'invention comprend avantageusement en outre au moins un dispositif d'assistance à l'ouverture du manchon souple, adapté pour pouvoir déformer le manchon souple d'une forme fermée vers une forme ouverte, le déplacement angulaire en rotation de la portion amont par rapport à la portion aval du manchon souple étant adapté pour que le manchon souple puisse prendre une forme ouverte.

Un tel dispositif d'assistance selon l'invention permet de remédier à ce problème. Ainsi, dans certaines conditions - notamment des conditions atmosphériques rencontrées à bord d'un ballon sonde - le manchon souple givre en position fermée et ni son propre poids, ni la pression du matériau granulaire ne suffisent à le déformer.

Le dispositif d'assistance à l'ouverture du manchon souple comprend avantageusement une pluralité de fils, dits fils d'écartement, passant dans le manchon souple. Pour ce qui concerne le manchon souple du diaphragme amont par exemple, les fils d'écartement sont fixés par une première extrémité à la bague amont et par une deuxième extrémité à la bague intermédiaire. Les fils d'écartement sont fixés à la bague amont et à la bague intermédiaire pour fonctionner à l'opposé du manchon souple du diaphragme amont.

Ainsi, lorsque les bagues amont et intermédiaire tournent l'une par rapport à l'autre de façon à déformer le manchon d'une forme fermée vers une forme ouverte, les fils d'écartement sont tendus de façon à plaquer le manchon souple contre les parois de la conduite et/ou des alésages de la bague amont et de la bague intermédiaire, pour forcer son ouverture.

Rien n'empêche de prévoir d'autres dispositifs d'assistance, en remplacement ou en combinaison. Par exemple des organes élastiques de rappel du manchon souple en direction des parois du conduit peuvent être prévus, notamment des ressorts, des fils élastiques, etc.. Ainsi, les fils d'écartement du dispositif d'assistance peuvent être élastiques.

En outre, les fils d'écartement peuvent être solidarisés au manchon souple, par exemple en y étant cousus le long d'une génératrice du manchon souple, par exemple en étant passés chacun dans un surjet formé dans le manchon souple, ou en étant intégrés à la couture du manchon, etc.

Alternativement ou en combinaison, rien n'empêche de prévoir un manchon souple élastique. Le manchon souple est alors avantageusement déformé de façon élastique en position fermée. Ainsi, il exerce un couple de rappel en position ouverte sur les bagues amont et intermédiaire, et revient élastiquement en forme ouverte dès que les bagues amont et intermédiaire sont déplacées pour relâcher la torsion qui est appliquée au manchon souple en position fermée. L'assemblage irréversible de la bague avec une vis sans fin permet de contrer - sans actionnement - le couple exercé par un tel manchon lorsque le manchon est au moins partiellement fermé.

En outre, un dispositif selon l'invention comprend en outre avantageusement un manchon de protection disposé diamétralement à l'intérieur de la bague amont, du diaphragme amont, du diaphragme aval et de la bague intermédiaire, ledit manchon de protection étant :
- adapté pour former un chemin de passage du matériau granulaire, ledit diaphragme étant dans une forme ouverte,
- étranglé par le diaphragme en forme fermée de façon à empêcher le passage de matériau granulaire.

Le manchon de protection est principalement disposé dans le conduit de façon à pouvoir permettre à un flux de matériau granulaire de passer dans le manchon de protection.

Le manchon de protection est avantageusement souple pour pouvoir se déformer entre au moins une forme ouverte laissant un passage au matériau granulaire et une forme fermée, étranglé par au moins l'un des diaphragmes amont ou aval, empêchant le passage de matériau granulaire. Le matériau et l'épaisseur du manchon souple sont avantageusement choisis pour assurer cette fonction.

Le manchon de protection présente avantageusement une extrémité amont jointe au conduit, dans une zone de jonction s'étendant sur une périphérie du conduit, en amont de la bague amont. Ainsi le matériau granulaire s'écoule dans le manchon de protection et non entre le manchon de protection et le conduit ou entre le manchon de protection et les bagues amont et intermédiaire et, dans certains modes de réalisation, entre le manchon de protection et la bague aval. Le manchon de protection est donc adapté pour pouvoir protéger les bagues amont et intermédiaire au moins et chaque diaphragme de l'abrasion exercée par le matériau granulaire lorsque ce dernier s'écoule dans un dispositif selon l'invention.

De plus le manchon de protection présente avantageusement une longueur supérieure à la distance entre ladite zone de jonction et la bague intermédiaire. Ainsi, le manchon de protection s'étend jusqu'en aval de la bague intermédiaire. Plus particulièrement, l'extrémité aval du manchon de protection est située, lorsque le diaphragme est en forme ouverte au moins, en aval de la bague intermédiaire, notamment en aval du diaphragme aval.

L'épaisseur et le matériau du manchon sont choisis pour assurer ces différentes fonctions, notamment une fonction de protection des bagues amont et intermédiaire et des diaphragmes amont et aval au moins par une résistance à l'abrasion produite par le matériau granulaire du mode de réalisation visé et une souplesse suffisante pour empêcher l'écoulement dudit matériau granulaire sous l'effet d'un étranglement par le diaphragme.

Avantageusement, un dispositif selon l'invention comprend au moins un deuxième diaphragme, dit diaphragme aval.

Le diaphragme aval est interposé dans ledit conduit en aval du diaphragme amont (l'amont et l'aval étant définis selon un sens privilégié de flux de matériau granulaire).

Ainsi, l'invention permet d'obtenir, pour la première fois, une vanne pour matériau granulaire comprenant une pluralité de diaphragmes en série, tout en restant fonctionnelle malgré une panne unique - ou blocage dans une position indéterminée - de l'un quelconque des diaphragmes.

En effet, même si un diaphragme est bloqué en position ouverte (par exemple le diaphragme amont si les bagues amont et intermédiaire sont simultanément bloquées), un deuxième diaphragme permet de continuer à réguler le flux de matériau granulaire à travers un dispositif selon l'invention.

Disposer d'une pluralité de manchons souples en série dans le conduit permet d'améliorer l'étanchéité du dispositif au matériau granulaire.

Disposer d'une pluralité de manchons souples en série dans le conduit permet en outre de remédier à la défaillance de l'un des manchons souples.

Rien n'empêche de prévoir un dispositif selon l'invention comprenant plus de deux diaphragmes en série. Chaque bague intermédiaire située entre deux diaphragmes successifs est alors avantageusement reliée solidaire en rotation de la portion aval du diaphragme située directement en amont et de la portion amont du diaphragme située directement en aval de ladite bague intermédiaire.

Avantageusement, un dispositif selon l'invention est aussi caractérisé en ce qu'il comprend en outre un dispositif de surveillance adapté pour déterminer la forme instantanée d'au moins un diaphragme. Un tel dispositif permet notamment de déterminer si ledit diaphragme est dans une position fermée ou ouverte.

Un tel dispositif de surveillance du diaphragme amont par exemple mesure l'angle formé entre la bague amont et la bague intermédiaire par rapport à un angle relatif prédéterminé. L'angle relatif prédéterminé correspond à une forme connue du diaphragme ; par exemple la forme fermée. Ainsi, la mesure de l'angle relatif entre la bague amont et la bague intermédiaire, par rapport à cet angle relatif prédéterminé permet de prévoir la forme théorique instantanée du diaphragme.

Le dispositif de surveillance comprend avantageusement une roue codeuse associée à ladite bague amont et/ou à ladite bague intermédiaire et/ou à ladite bague aval, ainsi qu'une unité de traitement de données adaptée pour déterminer, à partir de données fournies par chaque roue codeuse, un angle relatif entre au moins deux bagues.

Ainsi, dans certains modes de réalisation particuliers de l'invention, le dispositif de surveillance comprend une roue codeuse associée à chacune des deux bagues d'un diaphragme, ainsi qu'une unité de traitement de données adaptée pour déterminer, à partir de données fournies par chaque roue codeuse, un angle relatif entre lesdites bagues. Cet angle relatif est avantageusement communiqué à un dispositif de pilotage, ou à un pilote humain, de sorte que ceux-ci sont informés de la forme instantanée du diaphragme et peuvent envoyer des instructions en conséquence à destination des dispositifs d'actionnement respectivement de la bague amont et/ou d'une bague intermédiaire et/ou de la bague aval.

L'invention s'étend également à un procédé de contrôle d'un dispositif selon l'invention dans lequel chaque dispositif d'actionnement est alimenté et contrôlé indépendamment de chaque autre dispositif d'actionnement.

Plus particulièrement, chaque dispositif d'actionnement est relié à une source d'énergie - notamment d'électricité - indépendante de chaque source d'énergie de chaque autre dispositif d'actionnement. De même, chaque dispositif d'actionnement est piloté via une ligne de commande propre, indépendante de chaque ligne de commande de chaque autre dispositif d'actionnement.

Ainsi, un dispositif selon l'invention comprend une ligne de commande propre à chaque dispositif d'actionnement de façon à pouvoir commander chaque dispositif d'actionnement de façon indépendante.

Néanmoins, conformément à l'invention, rien n'empêche de prévoir l'actionnement simultanément de deux bagues successives, par exemple de la bague intermédiaire et de la bague aval, tant que le diaphragme amont est actionné correctement. Ainsi, le diaphragme aval peut être maintenu de façon permanente ouvert en n'actionnant que la bague amont, et/ou par une rotation simultanée à même vitesse et de même amplitude de la bague intermédiaire et de la bague aval. En cas de détection d'un blocage du diaphragme amont en position au moins partiellement ouverte (par exemple à cause d'un blocage simultané de la bague amont et de la bague intermédiaire) ladite bague aval peut-être actionnée indépendamment de la bague intermédiaire de sorte que le diaphragme aval permet de réguler le flux de matériau granulaire.

Ainsi, grâce à un procédé de contrôle selon l'invention, le dispositif de contrôle selon l'invention est entièrement redondant et résistant à une panne unique et à nombre de pannes doubles.

L'invention s'étend également à un ballon atmosphérique comprenant au moins un dispositif selon l'invention, ledit matériau granulaire formant un lest du ballon atmosphérique.

Plus particulièrement, le matériau granulaire comprend des billes d'acier utilisées comme lest.

Dans un ballon atmosphérique selon l'invention, chaque dispositif de contrôle est avantageusement tel que le conduit et les bagues sont coaxiaux selon un axe principal.

Dans un ballon atmosphérique selon l'invention, chaque dispositif de contrôle est avantageusement disposé de sorte que, lorsque le ballon atmosphérique est en vol, l'axe principal de chaque dispositif de contrôle selon l'invention est globalement aligné selon le vecteur gravité local. Le matériau granulaire (lest) s'écoule ainsi avantageusement sous l'effet de son propre poids dans le conduit et à travers les diaphragmes de chaque dispositif de contrôle selon l'invention, lesdits diaphragmes étant dans une forme au moins partiellement ouverte.

Le dispositif de surveillance permet avantageusement de régler la position angulaire relative de la bague amont et de la bague intermédiaire, donc de régler la section de passage du diaphragme et ainsi de contrôler le débit de lest. Un dispositif selon l'invention permet donc de contrôler au moins partiellement l'altitude du ballon atmosphérique et ce même malgré le blocage - quelle qu'en soit l'origine - de l'une des bagues du dispositif selon l'invention.

L'invention concerne également un dispositif de contrôle d'un flux de matériau granulaire, un procédé de contrôle d'un tel dispositif et un ballon atmosphérique équipé d'au moins un tel dispositif, caractérisés en combinaison par tout ou partie des caractéristiques mentionnées ci-dessus ou ci-après. En particulier, l'invention concerne un dispositif comprenant une pluralité de diaphragmes comprenant chacun une ou plusieurs des caractéristiques attribuées au diaphragme amont.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique d'un dispositif de contrôle d'un flux de matériau granulaire en vue éclatée selon un premier mode de réalisation conforme à l'invention,
- la figure 2 est une représentation schématique en coupe longitudinale d'un dispositif assemblé conforme à la figure 1,
- la figure 3 est une représentation schématique d'un dispositif de contrôle d'un flux de matériau granulaire en coupe longitudinale selon un deuxième mode de réalisation conforme à l'invention.

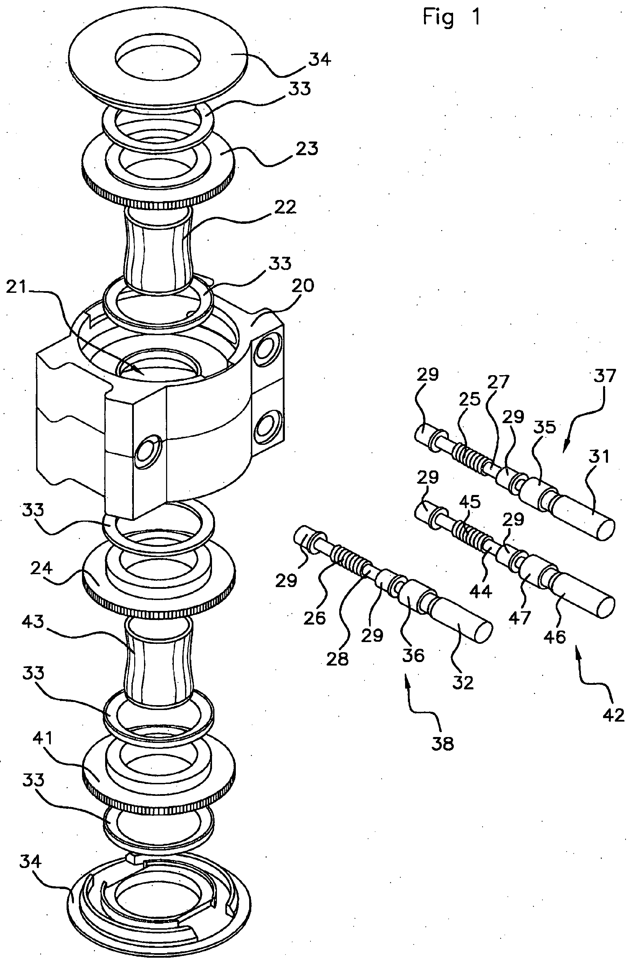

Les dispositifs de contrôle d'un flux de matériau granulaire selon deux modes de réalisation distinct conformes à l'invention présentés aux figures 1 à 3 sont des vannes pour lest de ballon atmosphérique.

Un tel dispositif comprend un bâti 20 présentant un passage traversant formant un conduit 21. Le conduit 21 est à section globalement cylindrique et rectiligne selon un axe, dit axe principal 30.

Un premier diaphragme, dit diaphragme amont, comprenant au moins un manchon souple 22 est interposé dans ledit conduit 21. Un deuxième diaphragme, dit diaphragme aval, comprenant au moins un manchon souple 43 est interposé dans ledit conduit 21, au-dessous dudit diaphragme amont, soit en aval dudit diaphragme amont par un sens d'écoulement gravitaire.

Les manchons souple 22, 43 sont de forme globalement cylindrique.

Une portion amont (première extrémité) du manchon souple 22 est fixée à une première bague, dite bague amont 23, et une portion aval (deuxième extrémité) du manchon souple est fixée à une deuxième bague, dite bague intermédiaire 24. Une portion amont (première extrémité) du manchon souple 43 est fixée à ladite bague intermédiaire 24 et une portion aval (deuxième extrémité) du manchon souple est fixée à une troisième bague, dite aval 41.

Les bagues amont, intermédiaire et aval 23, 24, 41 présentent chacune un alésage cylindrique autour d'un axe de symétrie. La bague amont 23 est montée rotative par rapport au bâti 20 autour d'un axe, dit axe amont, confondu avec son axe de symétrie. La bague intermédiaire 24 est montée rotative par rapport au bâti autour d'un axe, dit axe intermédiaire, confondu avec son axe de symétrie. La bague aval 41 est montée rotative par rapport au bâti autour d'un axe, dit axe aval, confondu avec son axe de symétrie.

Les bagues amont, intermédiaire et aval 23, 24, 41 sont montées par rapport au bâti avec l'axe amont, l'axe intermédiaire et l'axe aval confondus avec l'axe principal 30 du conduit 21. Le conduit 21 et les bagues amont, intermédiaire et aval 23, 24, 41 sont donc coaxiaux.

La bague amont 23 est actionnée par un premier dispositif d'actionnement 37. La bague intermédiaire 24 est actionnée par un deuxième dispositif d'actionnement 38 indépendant du dispositif d'actionnement 37 de la bague amont 23. La bague aval 41 est actionnée par un troisième dispositif d'actionnement 42 indépendant du dispositif d'actionnement 37 de la bague amont 23 et du dispositif d'actionnement 38 de la bague intermédiaire 24. Chaque bague amont, intermédiaire et aval 23, 24, 41 est donc actionnée en rotation autour de l'axe principal 30 de façon indépendante du bâti. De même, chaque bague (amont, intermédiaire et aval) est actionnée de façon indépendante des autres bagues.

Ainsi en cas de panne ou de blocage d'un dispositif d'actionnement d'une bague, ou d'un blocage de la bague elle-même, les autres bagues restent théoriquement mobiles et actionnées en rotation, de sorte que le dispositif selon l'invention reste opérationnel et les manchons souples 22, 42 peuvent être déplacés entre une forme ouverte et une forme fermée, de façon à pouvoir contrôler le flux de matériau granulaire dans le conduit 21.

Chaque extrémité (portion amont et portion aval) de chaque manchon souple 22, 43 peut donc être tournée autour de l'axe principal 30 de façon entièrement indépendante de sa position angulaire par rapport au bâti 20.

Chaque dispositif d'actionnement 37, 38, 42 dans les modes de réalisation particuliers présentés en figures 1 à 3, comprend une vis sans fin montée sur un arbre moteur, des paliers lisses, un accouplement élastique et un motoréducteur.

La bague amont 23 présente une périphérie extérieure cylindrique dentée engagée avec ladite vis sans fin 25 du dispositif d'actionnement 37. Ladite vis sans fin 25 est montée sur l'arbre moteur 27. L'arbre moteur 27 est inséré dans un alésage du bâti 20 et y est monté avec des paliers lisses 29 selon un axe orthogonal à l'axe principal 30. L'arbre moteur 27 est relié à l'arbre de sortie d'un motoréducteur 31 électrique par l'intermédiaire d'un organe d'accouplement élastique 35.

De même, la bague intermédiaire 24 présente une périphérie extérieure cylindrique dentée engagée avec une vis sans fin 26 du dispositif d'actionnement 38. Ladite vis sans fin 26 est montée sur l'arbre moteur 28. L'arbre moteur 28 est inséré dans un alésage du bâti 20 et y est monté avec des paliers lisses 29 selon un axe orthogonal à l'axe principal 30. L'arbre moteur 28 est relié à l'arbre de sortie d'un motoréducteur 32 électrique par l'intermédiaire d'un organe d'accouplement élastique 36.

De même, la bague aval 41 présente une périphérie extérieure cylindrique dentée engagée avec une vis sans fin 45 du dispositif d'actionnement 42. Ladite vis sans fin 45 est montée sur l'arbre moteur 44. L'arbre moteur 44 est inséré dans un alésage du bâti 20 et y est monté avec des paliers lisses 29 selon un axe orthogonal à l'axe principal 30. L'arbre moteur 44 est relié à l'arbre de sortie d'un motoréducteur 46 électrique par l'intermédiaire d'un organe d'accouplement élastique 47.

Le pas de chaque vis sans fin 25, 26, 45 est choisi pour que l'engrenage soit irréversible, c'est-à-dire que la rotation des vis sans fin entraîne la rotation des bagues, mais que la rotation des bagues est bloquée par la vis sans fin, même en l'absence d'alimentation électrique des motoréducteurs 31, 32, 46.

Les motoréducteurs 31, 32, 46 les arbres moteurs 27, 28, 44 et les vis sans fin 25, 26, 45 sont répartis de part et d'autre de l'axe principal 30 afin de limiter l'encombrement en hauteur (dimension le long de l'axe principal 30) du dispositif.

Une rondelle 33 (ou coussinet) de palier est montée entre chaque face de chaque bague (amont, intermédiaire et aval) et le bâti 20. Chaque rondelle 33 est réalisée avec des surfaces à faible coefficient de frottement, de façon à réduire les frottements lors de la rotation de chaque bague 23, 24, 41 par rapport au bâti 20. Ainsi, dans l'exemple proposé, les rondelles 33 sont choisies en bronze.

Le bâti 20 est avantageusement réalisé en deux parties assemblées selon l'axe principal 30, et comprend en outre deux couvercles 34 adaptés pour fermer le bâti une fois les rondelles 33 et les bagues amont, intermédiaire et aval 23, 24, 41 montées. Chaque couvercle 34 présente un alésage monté d'axe l'axe principal 30 et formant une portion des parois du conduit 21.

Le bâti 20, y compris les couvercles 34, est avantageusement réalisé dans un matériau léger. Dans l'exemple présenté il est réalisé en aluminium.

Le manchon souple (amont 22 ou aval 43) présente une forme ouverte de section de passage maximale lorsqu'un premier point d'attache de sa portion amont avec une première bague (respectivement amont 23 ou intermédiaire 24) est aligné selon l'axe principal 30 avec un deuxième point d'attache de sa portion aval avec une deuxième bague (respectivement intermédiaire 24 ou aval 41). Dans la suite on prend comme référence cette position relative angulaire de la bague amont 23 par rapport à la bague intermédiaire 24 (respectivement de la bague intermédiaire 24 par rapport à la bague aval 41): leur position angulaire relative est de 0°.

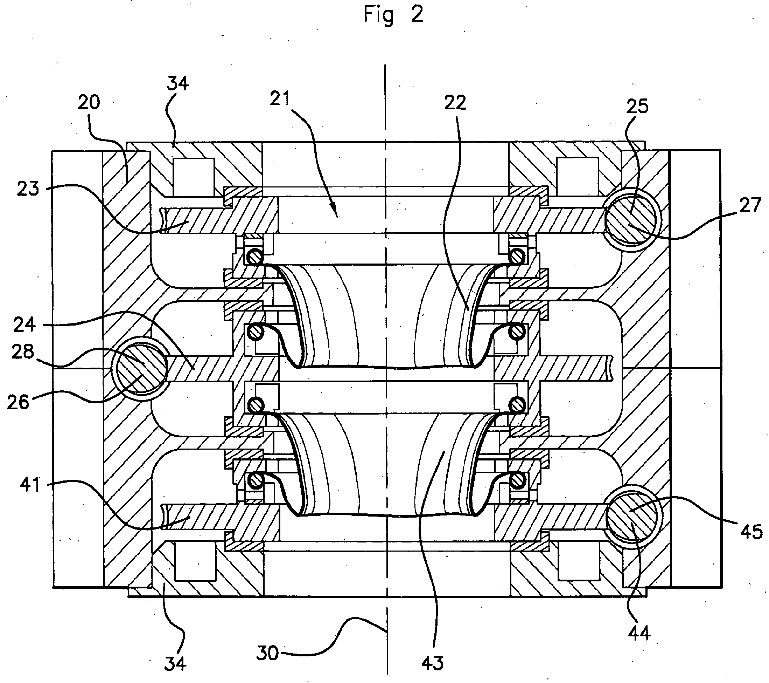

En figure 2, le dispositif est représenté avec les manchons 22, 43 dans une forme ouverte de section de passage maximale. Le déplacement angulaire entre la bague amont et la bague intermédiaire et entre la bague intermédiaire et la bague aval est de 0°.

Lorsque les bagues amont et intermédiaire 23, 24 ont une position angulaire relative de 180°, c'est-à-dire que l'une des bagues a tourné autour de l'axe principal 30 de 180° par rapport à l'autre bague, chaque génératrice du manchon souple 22 du diaphragme amont est tendue entre la bague amont et la bague intermédiaire et les génératrices se croisent sensiblement au centre du conduit 21, le long de l'axe principal 30, de sorte que celui-ci est fermé et que le passage de grains d'un matériau granulaire est empêché.

Rien n'empêche de prévoir un manchon plus long, la position angulaire relative entre bague amont et bague intermédiaire pour obtenir une forme fermée du manchon étant alors supérieure à 180°.

Il en va de même pour le manchon souple 43 du diaphragme aval entre la bague intermédiaire 24 et la bague aval 41.

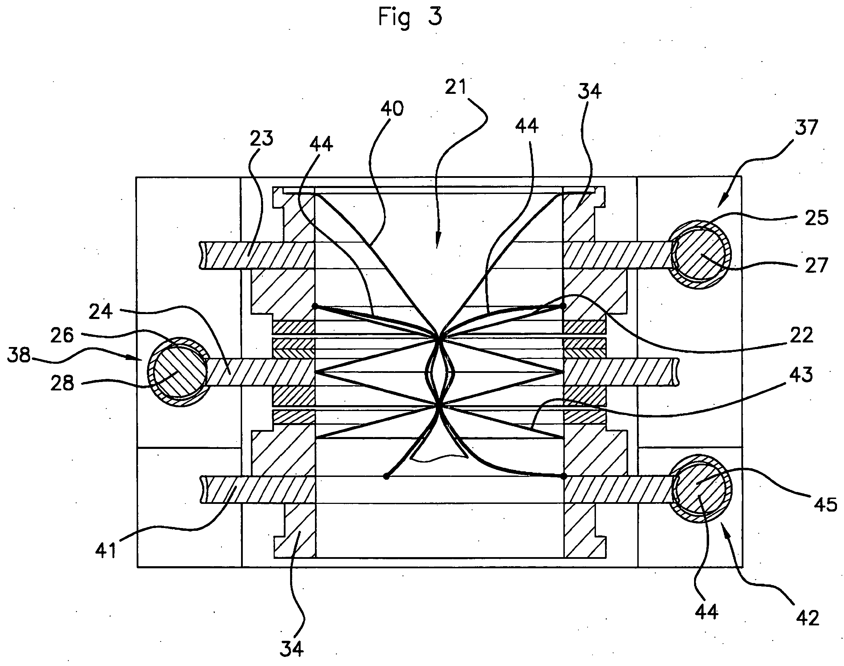

En figure 3, les manchons souples 22, 43 sont fermés par la torsion qui leur est appliquée par le déplacement angulaire important entre la bague amont 24 et la bague intermédiaire 23 et entre la bague intermédiaire 23 et la bague aval 41.

Les portions amont et aval du manchon souple 22 sont reliées hermétiquement à des parois du conduit 21 formées par les alésages des bagues amont et intermédiaire, de sorte que le passage d'un flux de matériau granulaire dans le conduit 21 est empêché par le manchon souple 22.

Dans le cas particulier d'une application en tant que vanne pour lest de ballon atmosphérique, le matériau granulaire est constitué de billes d'acier de diamètre moyen de 2mm au plus.

Les manchons souples sont choisis dans un matériau adapté aux conditions et au matériau granulaire dans les conditions d'utilisation. Ainsi, dans l'exemple présenté, pour une application de vanne pour lest de ballon atmosphérique, les manchons sont choisis en nylon, notamment pour sa résistance aux conditions atmosphériques de la haute atmosphère.

Dans le deuxième mode de réalisation d'un dispositif selon l'invention représenté en figure 3, comme dans le mode de réalisation des figures 1 et 2, deux diaphragmes successifs sont interposés dans le conduit 21. Ainsi, un premier diaphragme, dit diaphragme amont, comprend un manchon souple 22 disposé juste en amont d'un diaphragme aval comprenant un manchon souple 43.

Une portion amont du manchon souple 22 amont est reliée à une bague amont 24, une portion aval du manchon souple 22 amont est relié à une deuxième bague, dite bague intermédiaire 23. La bague intermédiaire 23 est disposée entre la bague amont 24 et une bague aval 41.

La bague aval 41 est actionnée par un dispositif d'actionnement 42 identique aux dispositifs d'actionnement 37, 38 des bagues amont 23 et intermédiaire 24.

Une portion amont du manchon souple 43 aval est reliée à la dite bague intermédiaire 23, et une portion aval manchon souple 43 aval est reliée à la bague aval 41.

Ainsi une rotation de la bague intermédiaire 23 par rapport à la bague amont 24 et à la bague aval 41 permet d'ouvrir ou de fermer simultanément le manchon souple 22 amont et le manchon souple 43 aval. Le blocage de la bague amont 24 et/ou de la bague aval 41 n'empêche ainsi pas au dispositif de rester opérationnel. De même, si la bague intermédiaire 23 est bloquée, l'actionnement rotation de la bague amont 24 et de la bague aval 41, permet au dispositif de rester opérationnel.

Afin de limiter l'usure du manchon souple 22, un manchon de protection 40 est avantageusement installé avec une extrémité amont du manchon de protection fixée à la périphérie du conduit 21 en amont de la bague amont et donc en amont du manchon souple. L'extrémité amont du manchon de protection est fixée entre le couvercle 34 du bâti et une partie basse d'une trémie (non représentée).

La longueur du manchon de protection est choisie pour que l'extrémité aval du manchon de protection soit en aval du diaphragme le plus en aval d'une série de diaphragmes. Dans le mode de réalisation particulier présenté, l'extrémité aval du manchon de protection est laissée libre en aval du second manchon souple 43.

Le manchon de protection est passé à l'intérieur de l'ouverture de passage formée par chaque manchon souple 22, 43.

Un tel manchon de protection 40 limite l'usure de chaque manchon souple 22 lors du passage d'un flux de matériau granulaire qui peut, dans certaines applications être abrasif : c'est le cas avec du gravier par exemple. En outre, le manchon de protection protège le manchon souple et les pièces mobiles telles que les bagues des poussières contenues dans le matériau granulaire.

Le manchon de protection évite aussi le coincement de grain(s) du matériau granulaire dans un manchon souple 22 lorsqu'il est fermé, ou entre deux manchons souples 22, 43 successifs.

Le manchon de protection 40 est avantageusement lui-même réalisé dans un matériau suffisamment souple pour pouvoir être ouvert et permettre le passage de matériau granulaire lorsque chaque manchon souple 22 est dans une forme ouverte, et étranglé par un manchon souple en forme fermée de façon à bloquer le passage de matériau granulaire.

Ainsi, en figure 3, un tel manchon de protection est représenté étranglé par un premier manchon souple 22 et par un deuxième manchon souple 43.

Par ailleurs, les conditions d'utilisation d'un dispositif selon l'invention peuvent être telles qu'un manchon souple en forme fermée conserve sa forme fermée malgré le déplacement angulaire relatif des deux bagues auquel il est relié vers une forme ouverte, et la pression exercée par le matériau granulaire. Les inventeurs ont notamment constaté un tel problème pour des dispositifs soumis à des conditions d'hygrométrie élevée et de température très basse, dans lesquelles du givre se forme sur le manchon souple, le figeant dans sa forme fermée.

C'est pourquoi, le mode de réalisation particulier représenté en figure 3 comprend un dispositif d'assistance à l'ouverture des manchons souples 22, 43. Le dispositif d'assistance à l'ouverture d'un manchon souple 22,43 comprend par exemple des fils, dits fils d'écartement 44, dont une première portion est fixée à la bague amont 23, et une seconde portion est reliée à la bague aval 41.

Plus particulièrement lorsque le dispositif comprend un manchon de protection 40, les fils d'écartement 44 sont passés entre les manchons souples 22, 43 et le manchon de protection, de sorte qu'ils sont protégés par le manchon de protection.

Ainsi, lorsque les bagues d'actionnement de chaque manchon souple sont déplacées en rotation de façon à ouvrir chaque diaphragme, les fils d'écartement 44 sont simultanément tendus le long des parois du conduit 21, de sorte à déformer chaque manchon souple 22 d'une forme fermée vers une forme ouverte et ainsi libérer un passage au matériau granulaire.

L'invention peut faire l'objet de nombreuses autres variantes de réalisation non représentées.

Ainsi, rien n'empêche de prévoir, dans un dispositif selon l'invention, un ou plusieurs diaphragme(s) à lamelles en plus ou en remplacement d'un manchon souple.

Un diaphragme selon l'invention peut alternativement comprendre un manchon de protection conforme à l'invention, et - à la place d'un manchon souple - une pluralité de fils et/ou de câbles, notamment au moins deux fil(s) et/ou câble(s), reliés à une bague amont et à une bague intermédiaire. Le déplacement angulaire de la bague amont et de la bague intermédiaire déplace lesdits fils et/ou câbles entre une position dans laquelle ils sont en tension et croisés pour fermer le manchon de protection par étranglement, et une position dans laquelle ils libèrent le manchon de protection qui peut prendre une forme ouverte de façon à permettre le passage d'un flux de matériau granulaire. Le diaphragme comprend alors lesdits fils/câbles et le manchon de protection. Le manchon de protection fait alors partie des diaphragmes

Le manchon de protection peut avantageusement comprendre un lest disposé à son extrémité libre, par exemple un lest de forme annulaire autour duquel son extrémité libre est cousue. Par exemple un anneau d'acier est disposé dans l'extrémité libre du manchon de protection. Un tel lest, lorsque le matériau granulaire s'écoule dans le sens de la gravité, permet en outre d'assister à l'ouverture du manchon souple.

De plus, le manchon de protection peut avantageusement être réalisé dans un matériau élastique. Il est alors avantageusement fixé par ses deux extrémités dans le conduit de passage. Il est déformé de façon élastique en position fermée (étranglé par le(s) manchon(s) souple(s)/fils/câbles en positon fermée). Ainsi il tend à revenir dans une position ouverte de passage du matériau granulaire. Le manchon de protection assure alors une double fonction de protection et d'assistance à l'ouverture du manchon souple (de fils/câbles).

## Revendications

1. Dispositif de contrôle d'un flux de matériau granulaire, comprenant :
- un bâti (20) présentant au moins un conduit (21) de passage de matériau granulaire,
- un premier dispositif, dit diaphragme amont :
o interposé dans ledit conduit (21),
o comprenant au moins une première portion, dite portion aval,
o comprenant au moins une deuxième portion, dite portion amont, mobile en rotation au moins par rapport à la portion aval,
o présentant au moins une forme ouverte dans laquelle il permet un passage d'un flux de matériau granulaire dans ledit conduit (21), pour au moins un premier déplacement angulaire en rotation de la portion amont par rapport à la portion aval,
o présentant au moins une forme fermée dans laquelle il empêche le passage d'un flux de matériau granulaire dans ledit conduit (21), pour au moins un deuxième déplacement angulaire en rotation de la portion amont par rapport à la portion aval,
- une première bague, dite bague amont (23), montée rotative par rapport au bâti (20) autour d'un premier axe, dit axe amont, et reliée à ladite portion amont dudit diaphragme amont pour pouvoir, par une rotation autour de l'axe amont, déplacer la portion amont du diaphragme amont en rotation par rapport à la portion aval du diaphragme amont, de façon à déplacer le diaphragme amont entre une forme ouverte et une forme fermée,
- une deuxième bague, dite bague intermédiaire (24), montée rotative par rapport au bâti autour d'un deuxième axe, dit axe intermédiaire, et montée rotative par rapport à la bague amont (23), et reliée à ladite portion aval dudit diaphragme amont pour pouvoir, par une rotation autour de l'axe intermédiaire, déplacer la portion aval du diaphragme amont en rotation par rapport à la portion amont du diaphragme amont, de façon à déplacer le diaphragme amont entre une forme ouverte et une forme fermée, de sorte qu'une rotation relative entre la bague amont (23) et la bague intermédiaire (24) permet de déplacer le diaphragme amont entre une forme ouverte et une forme fermée,
**caractérisé en ce qu'**il comprend en outre au moins :
- un deuxième diaphragme, dit diaphragme aval :
o interposé dans ledit conduit (21),
o comprenant au moins une première portion, dite portion aval,
o comprenant au moins une deuxième portion, dite portion amont, mobile en rotation au moins par rapport à la portion aval,
o présentant au moins une forme ouverte dans laquelle il permet un passage d'un flux de matériau granulaire dans ledit conduit (21), pour au moins un premier déplacement angulaire en rotation de la portion amont par rapport à la portion aval,
o présentant au moins une forme fermée dans laquelle il empêche le passage d'un flux de matériau granulaire dans ledit conduit (21), pour au moins un deuxième déplacement angulaire en rotation de la portion amont par rapport à la portion aval,
o ladite portion amont du diaphragme aval étant reliée à ladite bague intermédiaire (24) de façon à pouvoir, par une rotation de la bague intermédiaire autour de l'axe intermédiaire, être déplacée en rotation par rapport à la portion aval du diaphragme aval, de façon à déplacer le diaphragme aval entre une forme ouverte et une forme fermée,
- une troisième bague, dite bague aval (41), montée rotative par rapport au bâti (20) autour d'un axe aval, et montée rotative par rapport à la bague amont (23) et à la bague intermédiaire (24), et reliée à ladite portion aval du diaphragme aval pour pouvoir, par une rotation autour dudit axe aval, déplacer la portion aval du diaphragme aval en rotation par rapport à la portion amont du diaphragme aval, de façon à déplacer le diaphragme aval entre une forme ouverte et une forme fermée, de sorte qu'une rotation relative entre la bague intermédiaire (24) et la bague aval (41) permet de déplacer le diaphragme aval entre une forme ouverte et une forme fermée.

2. Dispositif selon la revendication 1, **caractérisé en ce que** le diaphragme amont comprend au moins un manchon souple (22) dont une première extrémité est solidaire en rotation de la bague amont (23) autour de l'axe amont et dont une deuxième extrémité est solidaire en rotation de la bague intermédiaire (24) autour de l'axe intermédiaire.

3. Dispositif selon l'une des revendication 1 ou 2, **caractérisé en ce que** le diaphragme aval comprend au moins un manchon souple (43) dont une première extrémité est solidaire en rotation de la bague intermédiaire (24) autour de l'axe intermédiaire et dont une deuxième extrémité est solidaire en rotation de la bague aval (41) autour de l'axe aval.

4. Dispositif selon l'une des revendication 1 à 3, **caractérisé en ce qu'**il comprend en outre un dispositif d'actionnement (37) de la bague amont (23) et un dispositif d'actionnement (38) de la bague intermédiaire (24) distinct du dispositif d'actionnement (37) de la bague amont (23).

5. Dispositif selon la revendication 4, **caractérisé en ce que** le dispositif d'actionnement (37) de la bague amont (23) comprend un arbre moteur (27) sur lequel est montée une vis sans fin (25), ladite vis sans fin étant engagée avec une roue dentée pour pouvoir entraîner cette roue dentée en rotation, ladite roue dentée étant adaptée pour faire tourner ladite bague amont autour de l'axe amont.

6. Dispositif selon l'un des revendications 4 ou 5, **caractérisé en ce que** le dispositif d'actionnement (38) de la bague intermédiaire (24) comprend un arbre moteur (28) sur lequel est montée une vis sans fin (26), ladite vis sans fin étant engagée avec une roue dentée pour pouvoir entraîner cette roue dentée en rotation, ladite roue dentée étant adaptée pour faire tourner ladite bague intermédiaire autour de l'axe intermédiaire

7. Dispositif selon l'une des revendications 1 à 6, **caractérisé en ce qu'**il comprend en outre un dispositif d'actionnement (42) de la bague aval (41), adapté pour pouvoir actionner ladite bague aval (41) indépendamment de la bague amont (23) et de la bague intermédiaire (24).

8. Dispositif selon la revendication 7, **caractérisé en ce que** le dispositif d'actionnement (42) de la bague aval (41) comprend un arbre moteur (44) sur lequel est montée une vis sans fin (45), ladite vis sans fin étant engagée avec une roue dentée pour pouvoir entraîner cette roue dentée en rotation, ladite roue dentée étant adaptée pour faire tourner ladite bague aval (41) autour de l'axe aval.

9. Dispositif selon l'une des revendications 4 à 8, **caractérisé en ce qu'**il comprend au moins deux lignes de commande indépendantes pour la commande des dispositifs d'actionnement (37, 38, 42) des bagues (23, 24, 41) amont, intermédiaire et aval.

10. Dispositif selon l'une des revendication 1 à 9, **caractérisé en ce que** le conduit (21) est sensiblement rectiligne selon un axe, dit axe principal (30), et **en ce que** l'axe amont, l'axe intermédiaire et l'axe aval sont sensiblement confondus avec cet axe principal (30).

11. Dispositif selon l'une des revendications 2 ou 3 et l'une des revendications 1 à 10, **caractérisé en ce qu'**il comprend en outre au moins un dispositif d'assistance (44) à l'ouverture d'au moins un manchon souple (22, 43), adapté pour pouvoir déformer ledit manchon souple d'une forme fermée vers une forme ouverte, le déplacement angulaire en rotation de la portion amont par rapport à la portion aval du manchon souple étant adapté pour que le manchon souple puisse prendre une forme ouverte.

12. Dispositif selon la revendication 11, **caractérisé en ce que** le dispositif d'assistance comprend une pluralité de fils, dits fils d'écartement (44), passant dans ledit manchon souple et fixés par une première extrémité à une première bague actionnant la portion amont dudit manchon souple et par une deuxième extrémité à une deuxième bague actionnant la portion aval dudit manchon souple.

13. Dispositif selon l'une des revendications 1 à 12, **caractérisé en ce qu'**il comprend en outre un manchon de protection (40) disposé diamétralement à l'intérieur :
- de la bague amont (23),
- du diaphragme amont,
- du diaphragme aval, et
- de la bague intermédiaire (24),
ledit manchon de protection (40) étant :
- adapté pour former un chemin de passage du matériau granulaire, lorsque lesdits diaphragmes amont et aval sont dans une forme ouverte,
- étranglé par au moins l'un desdits diaphragmes en forme fermée, de façon à empêcher le passage de matériau granulaire:

14. Dispositif selon l'une des revendications 1 à 13, **caractérisé en ce qu'**il comprend en outre un dispositif de surveillance adapté pour pouvoir mesurer un angle relatif entre la bague amont (23) et la bague intermédiaire (24) ou entre la bague intermédiaire (24) et la bague aval (41), ou entre la bague amont (23) et la bague aval (41).

15. Procédé de contrôle d'un dispositif selon l'une des revendications 1 à 14 comprenant au moins un dispositif d'actionnement (37, 38, 42) respectivement de chaque bague (23, 24, 41) amont, intermédiaire et aval, dans lequel chaque dispositif d'actionnement (37, 38, 42) est alimenté et contrôlé indépendamment de chaque autre dispositif d'actionnement (37, 38, 42).

16. Ballon atmosphérique **caractérisé en ce qu'**il comprend au moins un dispositif selon l'une des revendications 1 à 14, ledit matériau granulaire formant un lest du ballon atmosphérique.

## Patentansprüche

1. Kontrollvorrichtung für einen Granulatstrom, folgendes umfassend:
- ein Gehäuse (20), das zumindest einen Durchgangskanal (21) für das Granulat aufweist,
- eine erste Vorrichtung, die vorgelagerte Membran genannt wird:
-- die in den besagten Kanal (21) eingesetzt ist,
-- zumindest einen ersten Abschnitt umfassend, der nachgelagerter Abschnitt genannt wird,
-- zumindest einen zweiten Abschnitt umfassend, der vorgelagerter Abschnitt genannt wird, und der zumindest im Verhältnis zum nachgelagerten Abschnitt verdreht werden kann,
-- zumindest eine offene Form aufweisend, in der sie einen Durchlass eines Granulatstroms durch den besagten Kanal (21) bei zumindest einer ersten Winkelverdrehung des vorgelagerten Abschnitts im Verhältnis zum nachgelagerten Abschnitt ermöglicht,
-- zumindest eine geschlossene Form aufweisend, in der sie einen Durchlass eines Granulatstroms durch den besagten Kanal (21) bei zumindest einer zweiten Winkelverdrehung des vorgelagerten Abschnitts im Verhältnis zum nachgelagerten Abschnitt verhindert,
- einen ersten Ring, der vorgelagerter Ring (23) genannt wird, und der im Verhältnis zum Gehäuse (20) um eine erste Achse drehend montiert ist, die vorgelagerte Achse genannt wird, und der mit dem besagten vorgelagerten Abschnitt der besagten vorgelagerten Membran verbunden ist, um den vorgelagerten Abschnitt der vorgelagerten Membran durch eine Drehung um die vorgelagerte Achse im Verhältnis zum nachgelagerten Abschnitt der vorgelagerten Membran verdrehen zu können, um die vorgelagerte Membran zwischen einer offenen Form und einer geschlossenen Form zu verschieben,
- einen zweiten Ring, der Zwischenring (24) genannt wird, und der im Verhältnis zum Gehäuse um eine zweite Achse drehend montiert ist, die Zwischenachse genannt wird, und der im Verhältnis zum vorgelagerten Ring (23) drehend montiert ist, und der mit dem besagten nachgelagerten Abschnitt der besagten vorgelagerten Membran verbunden ist, um den nachgelagerten Abschnitt der vorgelagerten Membran durch eine Drehung um die Zwischenachse im Verhältnis zum vorgelagerten Abschnitt der vorgelagerten Membran verdrehen zu können, um die vorgelagerte Membran zwischen einer offenen Form und einer geschlossenen Form zu verschieben, sodass eine Drehung des vorgelagerten Rings (23) und des Zwischenrings (24) zueinander das Verschieben der vorgelagerten Membran zwischen einer offenen Form und einer geschlossenen Form ermöglicht,
**dadurch gekennzeichnet, dass** sie darüber hinaus zumindest folgendes umfasst:
- eine zweite Membran, die nachgelagerte Membran genannt wird:
-- die in den besagten Kanal (21) eingesetzt ist,
-- zumindest einen ersten Abschnitt umfassend, der nachgelagerter Abschnitt genannt wird,
-- zumindest einen zweiten Abschnitt umfassend, der vorgelagerter Abschnitt genannt wird, und der zumindest im Verhältnis zum nachgelagerten Abschnitt verdreht werden kann,
-- zumindest eine offene Form aufweisend, in der sie einen Durchlass eines Granulatstroms durch den besagten Kanal (21) bei zumindest einer ersten Winkelverdrehung des vorgelagerten Abschnitts im Verhältnis zum nachgelagerten Abschnitt ermöglicht,
-- zumindest eine geschlossene Form aufweisend, in der sie einen Durchlass eines Granulatstroms durch den besagten Kanal (21) bei zumindest einer zweiten Winkelverdrehung des vorgelagerten Abschnitts im Verhältnis zum nachgelagerten Abschnitt verhindert,
-- wobei der besagte vorgelagerte Abschnitt der nachgelagerten Membran mit dem besagten Zwischenring (24) verbunden ist, um durch eine Drehung des Zwischenrings um die Zwischenachse im Verhältnis zum nachgelagerten Abschnitt der nachgelagerten Membran verdreht zu werden, um die nachgelagerte Membran zwischen einer offenen Form und einer geschlossenen Form zu verschieben,
- einen dritten Ring, der nachgelagerter Ring (41) genannt wird, und der im Verhältnis zum Gehäuse (20) um eine nachgelagerte Achse drehend montiert ist, und der im Verhältnis zum vorgelagerten Ring (23) und zum Zwischenring (24) drehend montiert ist, und mit dem besagten nachgelagerten Abschnitt der nachgelagerten Membran verbunden ist, um den nachgelagerten Abschnitt der nachgelagerten Membran durch eine Drehung um die besagte nachgelagerte Achse im Verhältnis zum vorgelagerten Abschnitt der nachgelagerten Membran verdrehen zu können, um die nachgelagerte Membran zwischen einer offenen Form und einer geschlossenen Form zu verschieben, sodass eine Drehung des Zwischenrings (24) und des nachgelagerten Rings (41) zueinander das Verdrehen der nachgelagerten Membran zwischen einer offenen Form und einer geschlossenen Form ermöglicht.

2. Vorrichtung nach Anspruch 1, **dadurch gekennzeichnet, dass** die vorgelagerte Membran zumindest eine flexible Muffe (22) umfasst, deren erstes Ende mit dem vorgelagerten Ring (23) drehfest um die vorgelagerte Achse verbunden ist, und deren zweites Ende mit dem Zwischenring (24) drehfest um die Zwischenachse verbunden ist.

3. Vorrichtung nach einem der Ansprüche 1 oder 2, **dadurch gekennzeichnet, dass** die nachgelagerte Membran zumindest eine flexible Muffe (43) umfasst, deren erstes Ende mit dem Zwischenring (24) drehfest um die Zwischenachse verbunden ist, und deren zweites Ende mit dem nachgelagerten Ring (41) drehfest um die nachgelagerte Achse verbunden ist.

4. Vorrichtung nach einem der Ansprüche 1 bis 3, **dadurch gekennzeichnet, dass** sie darüber hinaus eine Stellvorrichtung (37) für den vorgelagerten Ring (23) und eine Stellvorrichtung (38) für den Zwischenring (24) umfasst, die sich von der Stellvorrichtung (37) für den vorgelagerten Ring (23) unterscheidet.

5. Vorrichtung nach Anspruch 4, **dadurch gekennzeichnet, dass** die Stellvorrichtung (37) für den vorgelagerten Ring (23) eine Antriebswelle (27) umfasst, auf der eine Endlosschraube (25) montiert ist, wobei die besagte Endlosschraube in ein Zahnrad eingreift, um dieses Zahnrad in Drehung versetzen zu können, wobei das besagte Zahnrad ausgeführt ist, um den besagten vorgelagerten Ring um die vorgelagerte Achse drehen zu lassen.

6. Vorrichtung nach einem der Ansprüche 4 oder 5, **dadurch gekennzeichnet, dass** die Stellvorrichtung (38) für den Zwischenring (24) eine Antriebswelle (28) umfasst, auf einer eine Endlosschraube (26) montiert ist, wobei die besagte Endlosschraube in ein Zahnrad eingreift, um dieses Zahnrad in Drehung versetzen zu können, wobei das besagte Zahnrad ausgeführt ist, um den besagten Zwischenring um die Zwischenachse drehen zu lassen.

7. Vorrichtung nach einem der Ansprüche 1 bis 6, **dadurch gekennzeichnet, dass** sie darüber hinaus eine Stellvorrichtung (42) für den nachgelagerten Ring (41) umfasst, die ausgeführt ist, um den besagten nachgelagerten Ring (41) unabhängig vom vorgelagerten Ring (23) und vom Zwischenring (24) betätigen zu können.

8. Vorrichtung nach Anspruch 7, **dadurch gekennzeichnet, dass** die Stellvorrichtung (42) für den nachgelagerten Ring (41) eine Antriebswelle (44) umfasst, auf einer eine Endlosschraube (45) montiert ist, wobei die besagte Endlosschraube in ein Zahnrad eingreift, um dieses Zahnrad in Drehung versetzen zu können, wobei das besagte Zahnrad ausgeführt ist, um den besagten nachgelagerten Ring (41) um die nachgelagerte Achse drehen zu lassen.

9. Vorrichtung nach einem der Ansprüche 4 bis 8, **dadurch gekennzeichnet, dass** sie zumindest zwei unabhängige Steuerleitungen zur Steuerung der Stellvorrichtungen (37, 38, 42) für den vorgelagerten, den Zwischenring und den nachgelagerten Ring (23, 24, 41) umfasst.

10. Vorrichtung nach einem der Ansprüche 1 bis 9, **dadurch gekennzeichnet, dass** der Kanal (21) entlang einer Achse in etwa geradlinig ist, die Hauptachse (30) genannt wird, und dadurch, dass die vorgelagerte Achse, die Zwischenachse und die nachgelagerte Achse in etwa mit dieser Hauptachse (30) zusammenfallen.

11. Vorrichtung nach einem der Ansprüche 2 oder 3 und einem der Ansprüche 1 bis 10, **dadurch gekennzeichnet, dass** sie darüber hinaus zumindest eine Hilfsvorrichtung (44) zum Öffnen zumindest einer flexiblen Muffe (22, 43) umfasst, die ausgeführt ist, um die besagte flexible Muffe von einer geschlossenen Form in eine offene Form verformen zu können, wobei die Winkelverdrehung des vorgelagerten Abschnitts im Verhältnis zum nachgelagerten Abschnitt der flexiblen Muffe ausgeführt wird, damit die flexible Muffe eine offene Form annehmen kann.

12. Vorrichtung nach Anspruch 11, **dadurch gekennzeichnet, dass** die Hilfsvorrichtung eine Vielzahl von Fäden umfasst, die Abstandsfäden (44) genannt werden, die durch die besagte flexible Muffe verlaufen, und an einem Ende mit einem ersten Ring verbunden sind, der den vorgelagerten Abschnitt der besagten flexiblen Muffe betätigt, und an einem zweiten Ende mit einem zweiten Ring, der den nachgelagerten Abschnitt der besagten flexiblen Muffe betätigt.

13. Vorrichtung nach einem der Ansprüche 1 bis 12, **dadurch gekennzeichnet, dass** sie darüber hinaus eine Schutzmuffe (40) umfasst, die diametral im Inneren folgender Elemente angeordnet ist:
- des vorgelagerten Ringes (23),
- der vorgelagerten Membran,
- der nachgelagerten Membran, und
- des Zwischenringes (24),
wobei die besagte Schutzmuffe (40):
- ausgeführt ist, um einen Durchgangsweg für das Granulat zu bilden, wenn die besagte vorgelagerte und nachgelagerte Membran in einer offenen Form sind,
- durch zumindest eine der besagten Membrane in der geschlossenen Form zugeschnürt wird, um den Durchlauf des Granulats zu verhindern.

14. Vorrichtung nach einem der Ansprüche 1 bis 13, **dadurch gekennzeichnet, dass** sie darüber hinaus eine Überwachungsvorrichtung umfasst, die ausgeführt ist, um einen Winkel zwischen dem vorgelagerten Ring (23) und dem Zwischenring (24) oder zwischen dem Zwischenring (24) und dem nachgelagerten Ring (41), oder zwischen dem vorgelagerten Ring (23) und dem nachgelagerten Ring (41) jeweils zueinander messen zu können.

15. Kontrollverfahren für eine Vorrichtung nach einem der Ansprüche 1 bis 14, zumindest eine Stellvorrichtung (37, 38, 42) für einen jeden des vorgelagerten, des Zwischenrings und des nachgelagerten Rings (23, 24, 41) umfassend, wobei jede Stellvorrichtung (37, 38, 42) unabhängig von jeder anderen Stellvorrichtung (37, 38, 42) gespeist und kontrolliert wird.

16. Wetterballon, **dadurch gekennzeichnet, dass** er zumindest eine Vorrichtung nach einem der Ansprüche 1 bis 14 umfasst, wobei das besagte Granulat einen Ballast des Wetterballons bildet.

## Claims

1. Device for controlling a flow of granular material, comprising:
- a frame (20) having at least one channel (21) for the passage of granular material;
- a first device, named upstream diaphragm:
∘ placed in said channel (21);
∘ comprising at least one first portion, named downstream portion;
∘ comprising at least one second portion, named upstream portion, that is rotationally movable at least relative to said downstream portion;
∘ having at least one open form, in which it allows a flow of granular material to pass through said channel (21), for at least one first rotational angular movement of said upstream portion relative to said downstream portion;
∘ having at least one closed form, in which it prevents the flow of granular material from passing through said channel (21), for at least one second rotational angular movement of said upstream portion relative to said downstream portion;
- a first ring, named upstream ring (23), rotationally mounted relative to said frame (20) about a first axis, named upstream axis, and linked to said upstream portion of said upstream diaphragm in order to enable, through a rotation about said upstream axis, said upstream portion of said upstream diaphragm to rotationally move relative to said downstream portion of said upstream diaphragm, so as to move said upstream diaphragm between an open form and a closed form;
- a second ring, named intermediate ring (24), rotationally mounted relative to said frame about a second axis, named intermediate axis, and rotationally mounted relative to said upstream ring (23) and linked to said downstream portion of said upstream diaphragm in order to enable, through a rotation about said intermediate axis, said downstream portion of said upstream diaphragm to rotationally move relative to said upstream portion of said upstream diaphragm, so as to move said upstream diaphragm between an open form and a closed form, so that a relative rotation between said upstream ring (23) and said intermediate ring (24) allows said upstream diaphragm to move between an open form and a closed form,
**characterized in that** it further comprises at least:
- one second diaphragm, named downstream diaphragm:
∘ placed in said channel (21);
∘ comprising at least one first portion, named downstream portion;
∘ comprising at least one second portion, named upstream portion, that is rotationally movable at least relative to said downstream portion;
∘ having at least one open form, in which it allows a flow of granular material to pass through said channel (21), for at least one first rotational angular movement of said upstream portion relative to said downstream portion;
∘ having at least one closed form, in which it prevents a flow of granular material from passing through said channel (21), for at least one second rotational angular movement of said upstream portion relative to said downstream portion;
∘ said upstream portion of said downstream diaphragm being linked to said intermediate ring (24) in order to be able, through a rotation of said intermediate ring about said intermediate axis, to be rotationally moved relative to said downstream portion of said downstream diaphragm, so as to move said downstream diaphragm between an open form and a closed form;
- a third ring, named downstream ring (41), rotationally mounted relative to said frame (20) about a downstream axis, and rotationally mounted relative to said upstream ring (23) and to said intermediate ring (24), and linked to said downstream portion of said downstream diaphragm in order to enable, through a rotation about said downstream axis, said downstream portion of said downstream diaphragm to rotationally move relative to said upstream portion of said downstream diaphragm, so as to move said downstream diaphragm between an open form and a closed form, so that a relative rotation between said intermediate ring (24) and said downstream ring (41) allows said downstream diaphragm to move between an open form and a closed form.

2. Device according to Claim 1, **characterized in that** said upstream diaphragm comprises at least one flexible sleeve (22), a first end of which is rotationally fixed to said upstream ring (23) about said upstream axis and a second end of which is rotationally fixed to said intermediate ring (24) about said intermediate axis.

3. Device according to Claim 1 or 2, **characterized in that** said downstream diaphragm comprises at least one flexible sleeve (43), a first end of which is rotationally fixed to said intermediate ring (24) about said intermediate axis and a second end of which is rotationally fixed to said downstream ring (41) about said downstream axis.

4. Device according to one of Claims 1 to 3, **characterized in that** it further comprises a device (37) for actuating said upstream ring (23) and a device (38) for actuating said intermediate ring (24) distinct from said device (37) for actuating said upstream ring (23).

5. Device according to Claim 4, **characterized in that** said device (37) for actuating said upstream ring (23) comprises a drive shaft (27) fitted with an endless screw (25), said endless screw being engaged with a gear wheel in order to be able to rotate said gear wheel, said gear wheel being adapted to cause said upstream ring to rotate about said upstream axis.

6. Device according to Claim 4 or 5, **characterized in that** said device (38) for actuating said intermediate ring (24) comprises a drive shaft (28) fitted with an endless screw (26), said endless screw being engaged with a gear wheel in order to be able to rotate said gear wheel, said gear wheel being adapted to cause said intermediate ring to rotate about said intermediate axis.

7. Device according to one of Claims 1 to 6, **characterized in that** it further comprises a device (42) for actuating said downstream ring (41), which device is adapted to be able to actuate said downstream ring (41) independently of said upstream ring (23) and of said intermediate ring (24).

8. Device according to Claim 7, **characterized in that** said device (42) for actuating said downstream ring (41) comprises a drive shaft (44) fitted with an endless screw (45), said endless screw being engaged with a gear wheel in order to be able to rotate said gear wheel, said gear wheel being adapted to cause said downstream ring (41) to rotate about said downstream axis.

9. Device according to one of Claims 4 to 8, **characterized in that** it comprises at least two independent control lines for controlling said devices (37, 38, 42) for actuating said upstream, intermediate and downstream rings (23, 24, 41).

10. Device according to one of Claims 1 to 9, **characterized in that** said channel (21) is substantially rectilinear along an axis, named main axis (30), and **in that** said upstream, intermediate and downstream axes are substantially coincident with said main axis (30).

11. Device according to Claim 2 or 3 and of one of Claims 1 to 10, **characterized in that** it further comprises at least one device (44) for assisting the opening of a least one flexible sleeve (22, 43), which device is adapted to be able to deform said flexible sleeve from a closed form to an open form, with the rotational angular movement of said upstream portion relative to said downstream portion of said flexible sleeve being adapted so that said flexible sleeve can assume an open form.

12. Device according to Claim 11, **characterized in that** said assistance device comprises a plurality of wires, named tensioning wires (44), passing through said flexible sleeve and being fixed at a first end to a first ring actuating said upstream portion of said flexible sleeve and at a second end to a second ring actuating said downstream portion of said flexible sleeve.

13. Device according to one of Claims 1 to 12, **characterized in that** it further comprises a protective sleeve (40) diametrically disposed inside:
- said upstream ring (23);
- said upstream diaphragm;
- said downstream diaphragm; and
- said intermediate ring (24),
said protective sleeve (40) being:
- adapted to form a path for the passage of said granular material when said upstream and downstream diaphragms are in an open form;
- restricted by at least one of said diaphragms in the closed form, so as to prevent the passage of said granular material.

14. Device according to one of Claims 1 to 13, **characterized in that** it further comprises a monitoring device adapted to be able to measure a relative angle between said upstream ring (23) and said intermediate ring (24) or between said intermediate ring (24) and said downstream ring (41) or between said upstream ring (23) and said downstream ring (41).

15. Method for controlling a device according to one of Claims 1 to 14, comprising at least one device (37, 38, 42) for respectively actuating each upstream, intermediate and downstream ring (23, 24, 41), **characterized in that** each actuating device (37, 38, 42) is fed and controlled independently of each of the other actuating devices (37, 38, 42).

16. Atmospheric balloon, **characterized in that** it comprises at least one device according to one of Claims 1 to 14, said granular material forming a ballast for said atmospheric balloon.
